Europäisches Patentamt

(19) European Patent Office

Office européen des brevets

(11) Publication number: **0 217 861 B1**

(12) # EUROPEAN PATENT SPECIFICATION

(45) Date of publication of patent specification: **18.09.91 Bulletin 91/38**

(51) Int. Cl.⁵: **C08L 33/02, C08L 33/08**

(21) Application number: **86902173.3**

(22) Date of filing: **12.03.86**

(86) International application number: **PCT/US86/00526**

(87) International publication number: **WO 86/05503 25.09.86 Gazette 86/21**

(54) **PRESSURE-SENSITIVE ADHESIVES BASED ON SIMILAR POLYMERS.**

(30) Priority: **14.03.85 US 711500**

(43) Date of publication of application: **15.04.87 Bulletin 87/16**

(45) Publication of the grant of the patent: **18.09.91 Bulletin 91/38**

(84) Designated Contracting States: **AT BE CH DE FR GB IT LI LU NL SE**

(56) References cited:
**US-A- 4 185 050**
**US-A- 4 282 140**
**US-A- 4 400 486**

(73) Proprietor: **AVERY INTERNATIONAL CORPORATION P.O. Box 7090 Pasadena California 91109 (US)**

(72) Inventor: **LIN, Kenneth, Shou-Chein 16932 Septo Street Sepulveda, CA 91343 (US)**

(74) Representative: **Patentanwälte Grünecker, Kinkeldey, Stockmair & Partner Maximilianstrasse 58 W-8000 München 22 (DE)**

EP 0 217 861 B1

## Description

The present invention relates to pressure-sensitive adhesive compositions.

A pressure-sensitive adhesive should be soft so that it can develop sufficient interfacial contact area with a substrate on application of very light pressure. It must, however, also be strong enough to resist debonding failure. Conventionally, this rate-dependent viscoelastic property of pressure-sensitive adhesives was achieved by blending tackifying resins with a rubber-based polymer. More recently, there has been an increased interest in using polyacrylates as pressure-sensitive adhesives for their superior weathering and aging properties. There are, however, some disadvantages for the acrylic pressure-sensitive adhesives: the material cost of the acrylates is higher than the conventional rubber-based adhesive, and tack performance is normally lower. It is difficult to find good tackifiers that are commercially available for acrylic adhesives. When a porous material such as paper is used as the facestock, many compounded acrylic adhesives are prone to have certain components "bleed" out and stain the facestock.

US-A-4185050 discloses a pressure-sensitive adhesive, based on three terpolymers, each contributing in part to providing a net composition of a predetermined molecular weight.

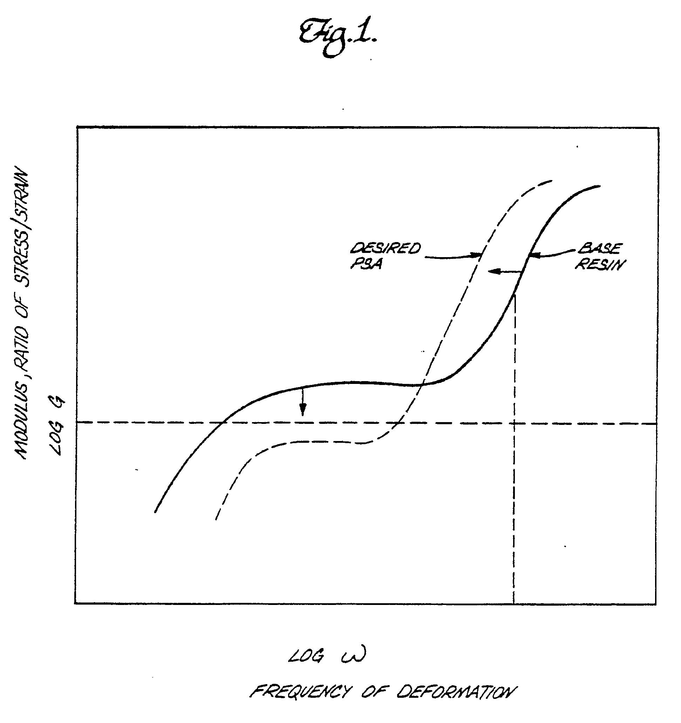

In 1964 Wetzel presented a model of a compoundable pressure-sensitive adhesive based on a resin and a sticky low-molecular-weight rubber in which a sticky low-molecular-weight tackifier was dispersed in the bulk of the base resin. Solid tackifiers have since been conventionally employed to induce pressure-sensitive characteristics to a base polymer. The effect of tackifier addition is shown in FIG. 1, attached hereto.

The present invention is based on a different formulation approach to pressure-sensitive adhesives. The technique allows the use of low-cost materials to form acrylic pressure-sensitive adhesives. The formulation is highly compatible with, and will not stain, the paper facestock. When a certain percentage of acid functionality is incorporated in the formulation, the novel adhesives can be removed easily from the substrate when the alkaline solution is applied.

The present invention is directed to a pressure-sensitive adhesive composition comprising in combination, a high-molecular-weight alkyl acrylate polymer having a molecular-weight greater than 10 times the entanglement molecular-weight of the polymer and/or a weight-average molecular weight of at least $10^5$, and containing at least 70 percent by weight of an alkyl acrylate having from 2 to 4 carbon atoms on the alkyl side chain, and from 40 percent by weight to 80 percent by weight of a low-molecular weight alkyl acrylate polymer, based on the total weight of said high-molecular-weight alkyl acrylate polymer and said low-molecular-weight alkyl acrylate polymer, said low-molecular-weight alkyl acrylate polymer being formed of an alkyl acrylate identical to the alkyl acrylate of said high-molecular-weight alkyl acrylate polymer, having a molecular weight of less than 2 times the entanglement molecular-weight of the polymer and/or a weight-average molecular weight of less than $2 \times 10^4$, and containing at least 70 percent by weight of the alkyl acrylate, the comonomer contents of said high-molecular-weight alkyl acrylate polymer and said low-molecular-weight alkyl acrylate polymer differing by no more than 10 pecent by weight.

The present invention further relates to a pressure-sensitive adhesive composition comprising a high-molecular weight alkyl acrylate polymer comprised of at least 70 percent by weight ethyl acrylate, said high-molecular-weight alkyl acrylate polymer having a molecular-weight which is at least 10 times the entanglement molecular-weight and/or a weight-average molecular weight of at least $10^5$, and a low-molecular-weight alkyl acrylate polymer having a molecular-weight of less than 2 times the entanglement molecular-weight and/or a weight-average molecular weight of less than $2 \times 10^4$, and containing at least 70 percent by weight ethyl acrylate, the balance of said low-molecular-weight alkyl acrylate being present in a concentration of from 40 to 80 percent by weight, based on the total weights of the high-molecular- weight alkyl acrylate polymer and the low-molecular weight alkyl acrylate polymer, and providing a a composition having a glass-transition temperature of at least 40°C below use temperature, said high-molecular-weight alkyl acrylate polymer and/or said low-molecular-weight alkyl acrylate polymer containing an interpolymer amount of at least one unsaturated carboxylic acid.

Moreover, the present invention relates to an alkali-removable pressure-sensitive adhesive composition comprising a high-molecular-weight copolymer of ethyl acrylate and acrylic acid, said high-molecular-weight copolymer containing 96 percent by weight ethyl acrylate and 4 percent by weight acrylic acid and having a molecular-weight greater than 10 times the entanglement molecular-weight and/or a weight-average molecular weight of at least $10^5$, in combination with a low-molecular-weight copolymer of ethyl acrylate and acrylic acid containing 88 percent by weight ethyl acrylate and 12 percent by weight acrylic acid, said low-molecular-weight copolymer having a molecular-weight of less than 2 times the entanglement molecular-weight and/or a weight-average molecular weight of less than $2 \times 10^4$, said pressure-sensitive-adhesive composition having a glass-transition temperature of at least 40°C below the use temperature thereof.

The high-molecular-weight alkyl acrylate polymer contains preferably at least 90 percent by weight alkyl

2

acrylate and the low-molecular-weight alkyl acrylate polymer contains preferably at least 80 percent by weight alkyl acrylate.

The use of copolymers is preferred. However, the polymers may differ in comonomer content by no more than 10 percent by weight.

The presently preferred alkyl acrylate is ethyl acrylate and, while any copolymerizable comonomer can be used to modify the properties of the polymers employed, it is preferred to use an unsaturated carboxylic acid, preferably acrylic acid, to enable crosslinking to modify adhesive properties. The low-molecular-weight alkyl acrylate polymer is present in a concentration of from 40 percent to 80 percent by weight, based on the mixture of high- and low-molecular-weight alkyl acrylate polymers.

By combining the two highly similar polymers, one can obtain without loss of compatibility a wide range of adhesive properties and applications In addition, alkali removability is feasible for the formed pressure-sensitive adhesives for an acid content of from 5 percent to 30 or more percent by weight. Glass-transition temperature of the mixed polymers with additives is at least 40°C below the use temperature.

FIG. 1 is a plot of the log of the shear modulus (Log G) or the log of the ratio of shear stress over shear strain vs. frequency of deformation (Log $\omega$) for a base resin (solid line) modified by a tackifier system to form a pressure-sensitive adhesive of desired properties (dashed line).

FIG. 2 shows, on the same scale as FIG. 1, the formulation of a pressure-sensitive adhesive by plasticizing a high-molecular-weight alkyl acrylate polymer with a low-molecular-weight alkyl acrylate polymer.

According to the present invention there are provided pressure-sensitive adhesives based on a mixture of elastomeric, high-molecular-weight alkyl acrylate polymers and essentially liquid, low-molecular-weight alkyl acrylate polymers of identical or differing comonomeric content, which in combination form low-cost pressure-sensitive adhesives having a wide variety of properties, including aggressive adhesion to polyethylene substrates and, when containing a copolymerized carboxylic acid, alkali removability.

The pressure-sensitive adhesives of the invention comprise, in admixture, an alkyl acrylate homopolymer containing from 70 percent to 100 percent by weight polymerized alkyl acrylate in which the carbon content of the alkyl side chain portion of the acrylate is from 2 to 4 carbon atoms. The high-molecular-weight alkyl acrylate polymer preferably contains from 90 percent to 100 percent by weight of the alkyl acrylate and has a molecular weight of at least 10 times the entanglement molecular-weight. Stated another way, it must have a weight-average molecular-weight (Mw) of at least $10^5$, normally from about $10^5$ to about $5 \times 10^6$. "Entanglement molecular-weight" as used herein, is defined in Viscoelastic Properties of Polymers, 3rd Edition, John D. Ferry, John Wiley and Sons, 1981.

The second component is a low-molecular-weight, generally liquid alkyl acrylate polymer in which the alkyl portion is the same as that of the high-molecular-weight alkyl acrylate polymer. The second alkyl acrylate polymer has a molecular-weight which is less than 2 times the entanglement molecular-weight, and/or a weight-average molecular-weight of less than $2 \times 10^4$, or less than 20,000. As with the high-molecular-weight alkyl acrylate polymer, from 0 percent to 30 percent, preferably from 0 percent to 10 percent, of the low-molecular-weight polymer may be one or more other comonomer(s), with the proviso that the comonomer content of the high-molecular-weight alkyl acrylate polymer does not differ from the comonomer content of the low-molecular-weight alkyl acrylate polymer by more than 10 percent by weight. Any comonomer that is polymerizable with an alkyl acrylate can be employed. There may be mentioned aromatic monomers such as styrene; unsaturated carboxylic acids containing from 2 to 6 carbon atoms, such as acrylic acid, methacrylic acid, itaconic acid, maleic acid, and fumaric acid; acrylates, such as methyl acrylate and 2-ethylhexyl acrylate; and methacrylates, such as methyl methacrylate, ethyl methacrylate or butyl methacrylate. The comonomer content may be the same or totally different in terms of the high-molecular-weight alkyl acrylate polymer as compared to the low-molecular-weight alkyl acrylate polymer. There may be included other ingredients, such as anti-oxidants, colorants or UV absorbents.

In the conventional pressure-sensitive-adhesive system, a tackifier system is employed to modify properties of the base resin, and acts to raise the glass-transition temperature and to lower the rubber-plateau modulus of the base resin. This is shown in Fig. 1, wherein the solid line is the base resin and the dashed line is the desired pressure-sensitive adhesive (PSA).

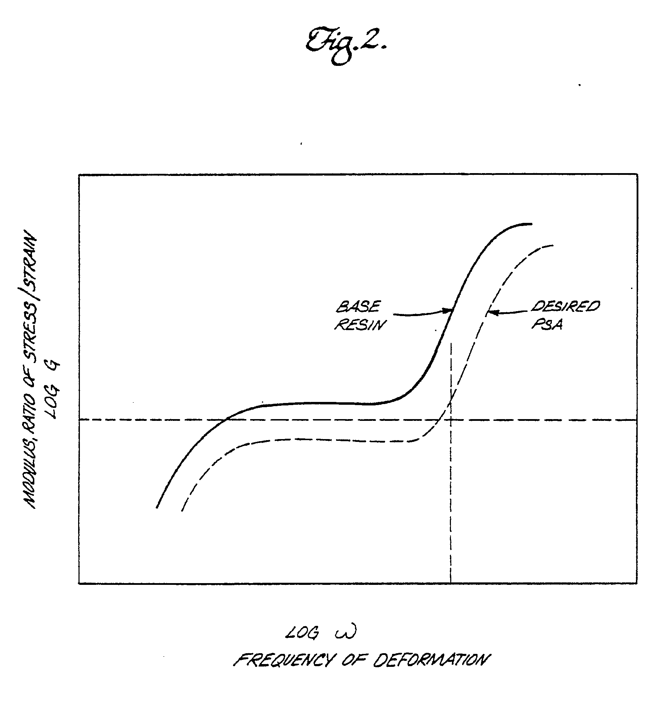

In the practice of the instant invention and with reference to FIG. 2, the low-molecular-weight polymer acts as a plasticizer which lowers the glass-transition temperature and rubber plateau of the base resin (solid line), to adhere the desired master curve (dashed line) for the pressure-sensitive adhesive.

The amount of low-molecular-weight alkyl acrylate polymer added will depend on the nature of the high-molecular-weight alkyl acrylate polymer and the pressure-sensitive-adhesive properties desired. Generally, the low-molecular-weight alkyl acrylate polymer will be present in an amount of from 40 percent to 80 percent by weight, based on the total weight of the alkyl acrylate polymers.

The components of pressure-sensitive-adhesive formulations of the instant invention are formed by emulsion polymerization. The means employed are, in the main, conventional. The determination as to whether the product of emulsion polymerization will be a high-molecular-weight alkyl acrylate polymer or a low-molecular-weight alkyl acrylate polymer, is by inclusion of a chain transfer agent such as n-dodecyl mercaptan (n-DDM). The chain transfer agent may be present in an amount up to 10 percent by weight or more of the emulsion monomer system. Surfactants can modify the distribution of molecular weights from broad to narrow.

Besides separate formulation of the pressure-sensitive adhesives of this invention from an individually polymerized high-molecular-weight alkyl acrylate polymer and a low-molecular-weight alkyl acrylate polymer, and the polymerization of a mixture of monomers, emulsion polymerization can be conducted by initially polymerizing the high-molecular-weight polymer in the absence of a chain transfer agent to a desired solids level; and then by the inclusion in the polymerization system of a chain transfer agent to induce limitations on the molecular weight of the polymeric chain in continued polymerization, to form an in situ mixture of high-molecular-weight alkyl acrylate polymers and low-molecular-weight alkyl acrylate polymers which, on deposition from the emulsion onto a face stock, provide a pressure-sensitive adhesive.

The compositions of this invention uniquely enable the adhesive coating of porous facestocks without bleed, have wet-stick characteristics, namely, the ability to adhere to surfaces on which moisture has condensed and which contain carboxylic-acid moieties, and have the ability to be readily removed from a substrate by alkaline cleaning solutions and caustic solutions.

The following Examples are illustrative of the invention. "P" means panel failure; "C" means cohesive failure; "IPT" means immediate payer tear; "PS" means panel stain; "SPS" means slight panel stain; "ks" means kiloseconds; "F" means fail; and "PE" means polyethylene. Test methods utilized were as follows: molecular weight distribution by ASTM D-3536-76, ASTM D-3590-68 and ASTM E-682-79; shear by ASTM D-3654-78 and D-1000-68 and PSTC (Pressure-Sensitive Tape Council) Test #7, 6th Edition; 90° peel by PSTC Test #2, 5th Edition; loop tack by PSTC Test #7, 6th Edition; mandrel by ASTM D-3654-78 and D-1000-68. Vellum 80 was used as a facestock because it is highly absorbant and amplifies bleed.

Examples 1 to 10

There were formed by emulsion polymerization, homopolymers of ethyl acrylate to provide a feasibility evaluation of the ability to form pressure-sensitive adhesives from high-molecular-weight and low-molecular-weight homopolymers of ethyl acrylate. Examyles 1 to 3 disclose the formation of high-molecular-weight elastomeric resins, and Examples 5 to 7 disclose the formation of low-molecular-weight resins. Example 4 is a transitional example, showing the formation of a resin of reduced molecular weight as a consequence of the introduction of a small quantity of n-dodecyl mercaptan (n-DDM) as a chain transfer agent. The polymerization conditions and polymer properties are shown in Table I. Solids content after polymerization was about 50 percent by weight. Table II shows the performance properties of mixtures of the polymers of Example 2 and Example 7.

Examples 11 to 24

While the results of Examples 1 to 10 establish the feasibility of the use of polyethyl acrylate homopolymers, in the formation of general-purpose pressure-sensitive adhesives from materials which would otherwise not have pressure-sensitive adhesive characteristics, it was determined to use a carboxylic acid as part of the emulsion polymerization system to form adhesives of varying properties, as a consequence of not only acid content but of the use of a crosslinking agent as well. The carboxylic acid employed was acrylic acid. In Table III, Examples 11 to 16 show, respectively, the conditions for the formation of high- and low-molecular-weight ethyl acrylate/acrylic acid copolymers having 10 percent, 6 percent, and 2 percent by weight acrylic acid. Table IV, Examples 17 to 24, shows the adhesive properties of combinations of the polymers formed in Examples 11 to 16. In preparation of the polymers, 50 parts of the pre-emulsion was added to a reactor charge at 40°C and, while that temperature was maintained, the balance was added over 60°C min. Heating continued for 30 min at 60°C. Five parts of the accelerator were added to the reactor charge and the balance to the pre-emulsion.

TABLE I

Examples 1 to 7

| EXAMPLES | 1 | 2 | 3 | 4 | 5 |
|---|---|---|---|---|---|
| **Monomer, pts** | | | | | |
| Ethyl Acrylate | 100 | 100 · | 100 | 100 | 100 |
| **Surfactant** | | | | | |
| N-111[1] | 3.6 | – | – | – | – |
| X-200[2] | – | 3.4 | – | – | – |
| CO-436[3] (60% solids) | – | – | 4.3 | – | – |
| CO-730[4] (60% solids) | – | – | – | 5.7 | 5.7 |
| **Buffer** | | | | | |
| $(NH_4)_2CO_3$ | .21 | .14 | .14 | .14 | .14 |
| **Initiator** | | | | | |
| $(NH_4)_2S_2O_8$ | .28 | .28 | .14 | .57 | .57 |
| t-BHP[5] | – | .28 | .28 | .57 | .57 |
| AWC[6] | .28 | .28 | .28 | .29 | .29 |
| $Fe^{3+}EDTA$ | Trace | Trace | Trace | Trace | Trace |
| **Chain Transfer** | | | | | |
| n-DDM | None | None | None | .57 | 1.50 |

| POLYMERIZATION CONDITIONS | Monomer Feed | Pre-Emulsion | Pre-Emulsion | Pre-Emulsion | Pre-Emulsion |
|---|---|---|---|---|---|
| Reactor Temperature, °K | 308-318 | 333 | 333 | 308-313 | 308-313 |
| Jacket Temperature, °K | 293-298 | 313 | 313 | 293 | 293 |
| Feed Time, ks | 3.6 | 3.6 | 3.6 | 2.7 | 2.7 |
| Cook-Off Time, ks | 1.8 | 1.8 | 1.8 | 1.8 | 1.8 |
| Cook-Off Temperature, °K | 323 | 333 | 333 | 323 | 323 |
| Mw | $4.68 \times 10^5$ | $2.61 \times 10^5$ | $4.10 \times 10^5$ | $1.01 \times 10^5$ | $4.4 \times 10^4$ |
| Distribution Coefficient (Mw/Mn) | 3.4 | 8.1 | 4.6 | 8.1 | ·3.2 |
| % Below 20,000 | 2.2 | 32.3 | 3.6 | 41.0 | 55.0 |

1     a nonionic surfactant manufactured and sold by Rohm and Haas
2     an anionic/nonionic surfactant manufactured and sold by Rohm and Haas
3, 4  an ethoxylated alkyl phenol surfactant manufactured and sold by GAF
5     tert-butyl hydroperoxide
6     sodium formaldehyde sulfoxylate

EP 0 217 861 B1

TABLE I (Cont'd.)

Examples 1 to 7

Synthesis of Polyethylacrylate Homopolymers

| EXAMPLES | 6 | 7 |
|---|---|---|
| Monomer, pts | | |
| Ethyl Acrylate | 100 | 100 |
| Surfactant | | |
| N-111 | -- | -- |
| X-200 | -- | -- |
| CO-436 | -- | -- |
| CO-730 | 5.7 | 5.7 |
| Buffer | | |
| $(NH_4)_2CO_3$ | .14 | .14 |
| Initiator | | |
| $(NH_4)_2S_2O_8$ | .57 | .57 |
| t-BHP | .57 | .57 |
| AWC | .29 | .29 |
| $Fe^3$+EDTA | Trace | Trace |
| Chain Transfer | | |
| n-DDM | 5.00 | 10.00 |

| POLYMERIZATION CONDITIONS | Monomer Feed | Pre-Emulsion |
|---|---|---|
| Reactor Temperature, °K | 328 | 328 |
| Jacket Temperature, °K | 313 | 313 |
| Feed Time, ks | 3.6 | 3.6 |
| Cook-Off Time, ks | 1.8 | 1.8 |
| Cook-Off Temperature, °K | 333 | 333 |
| Mw | $2.15 \times 10^4$ | $1.78 \times 10^4$ |
| MWD | 2.3 | 2.3 |
| % Below 20,000 | 28.0 | 21.0 |

TABLE II

Examples 8 to 10

| EXAMPLES | 8 | 9 | 10 |
|---|---|---|---|
| Blend, Ex. 2/Ex. 7 | 60/40 | 50/50 | 40/60 |
| Facestock | Vellum 80 | Vellum 80 | Vellum 80 |
| Coat Weight g/m$^2$ | 24 g. | 24 g. | 24 g. |
| Quick Stick | | | |
| Recycled Cardboard | Good | Good | Good |
| Poly-ethylene | Good | Good | Good |
| 0.500 kg Shear, ks | (NA) | 0.1(C) | (NA) |
| 90° Peel (N/m) | 208(P) | 172(P) | 156(P) |

EP 0 217 861 B1

TABLE III

| EXAMPLE | 11 | 12 | 13 | 14 | 15 | 16 |
|---|---|---|---|---|---|---|
| **Reactor Charge** | | | | | | |
| $H_2O$ | 200 | 200 | 200 | 200 | 200 | 200 |
| CO-436 (60%) | 1.0 | 1.0 | 1.0 | 1.0 | 1.0 | 1.0 |
| $Fe^{3+}$EDTA | 0.1 | 0.1 | 0.1 | 0.1 | 0.1 | 0.1 |
| $Na_2P_2O_7$ | .1.0 | 1.0 | 1.0 | 1.0 | 1.0 | 1.0 |
| $(NH_4)_2CO_3$ | 1.5 | 1.5 | 1.5 | 1.5 | 1.5 | 1.5 |
| $(NH_4)_2S_2O_8$ | .4.0 | 4.0 | 4.0 | – | – | – |
| **Pre-Emulsion** | | | | | | |
| $H_2O$ | 300 | 300 | 300 | 300 | 300 | 300 |
| CO-436 (60%) | 20 | 20 | 20 | 20 | 20 | 20 |
| TREM-L-40 (40%)[7] | 10 | 10 | 10 | 10 | 10 | 10 |
| Ethyl Acrylate | 630 | 648 | 606 | 630 | 648 | 686 |
| Acrylic Acid | 70 | 52 | 14 | 70 | 52 | 14 |
| Dodecyl Mercaptan | 70 | 70 | 70 | – | – | – |
| t-BHP | 4.0 | 4.0 | 4.0 | 1.0 | 1.0 | 1.0 |
| **Accelerator** | | | | | | |
| $H_2O$ | 100 | 100 | 100 | 100 | 100 | 100 |
| AWC | 2.0 | 2.0 | 2.0 | 2.0 | 2.0 | 2.0 |
| **Product** | | | | | | |
| Solids 8% | 55 | 55.2 | 55.5 | 52.7 | 53.1 | 53.1 |
| Viscosity, Pa.s(CPS) | 0.41(410) | – | – | 1.95(1950) | 1.0(1000) | 2.3(2300) |
| pH | 4.2 | – | – | 5.0 | 5.1 | 6.3 |
| Mw | $1.0 \times 10^4$ | $1.1 \times 10^4$ | $1.3 \times 10^4$ | $4.8 \times 10^5$ | $5.7 \times 10^5$ | $3.2 \times 10^5$ |
| Dispersity Index | 2.1 | 2.1 | 2.3 | 4.6 | 4.9 | 4.5 |
| Wt. % Acrylic Acid | 10 | 6 | 2 | 10 | 6 | 2 |

[7] A sodium alkyl allyl sulfosuccinate manufactured and sold by Diamond Shamrock

TABLE IV

Examples 17 to 42

| EXAMPLE | 17 | 18 | 19 | 20 | 21 | 22 | 23 | 24 |
|---|---|---|---|---|---|---|---|---|
| % Acrylic Acid in High-Mol.-Wt. Polymer | 10 | 10 | 2 | 2 | 6 | 6 | 6 | 6 |
| % Acrylic Acid in Low-Mol.-Wt. Polymer | 10 | 2 | 10 | 2 | 6 | 6 | 6 | 6 |
| Wt. % of Low-Mol.-Wt. Polymer in Blend | 50 | 50 | 50 | 50 | 75 | 75 | 25 | 25 |
| Crosslinking Agent* CX-100 (%) | 0.4 | 0.4 | 0.4 | 0.4 | 0.8 | 0 | 0.8 | 0 |
| Final Tack* | 365.7(P) | 77(P) | 578(P) | 271(P) | 443(P) | 443(P) | 462(P) | 154(P) |
| Loop Tack (PE) | 170(PS) | 77(P) | 230(PS) | 160(PS) | 250(PS) | 420(PS) | 100(PS) | 150(PS) |
| 90° Peel (PE) | 190(PS) | 38(PS) | 290(PS) | 200(PS) | 270(PS) | 270(PS) | 77(PS) | 190(PS) |
| 90° Peel (SS) | 500(IPT) | 120(PS) | 410(PS) | 230(PS) | 420(SPS) | 650(PS/F) | 310(IPT) | 460(IPT) |
| Shear (0.5 kg) | 78** | 0.08(C) | 0.75(C) | 0.18(C) | 1.98(C) | 0.24(C) | 245** | 21.9(PF) |
| 1/2" Mandrel (PE) | <0.4 | Fail | 8.0 | 0.4 | 0.8-0.8 | 1.6-1.6 | Fail | <0.4 |
| (12.7mm, 7 days) | | (11.2) | | | 1.6-6.4 | | (11.2) | |
| Bleed Resistance at 60°C (1 week) | Very Good | Very Poor | Good | Good | Poor | Good | Very Good | Good |

*Loop tack to glass
**No slip

TABLE IV (continued)

Examples 17 to 42

| EXAMPLE | 25 | 26 | 27 | 28 | 29 | 30 | 31 | 32 |
|---|---|---|---|---|---|---|---|---|
| % Acrylic Acid in High-Mol.-Wt. Polymer | 6 | 10 | 10 | 2 | 2 | 6 | 6 | 6 |
| % Acrylic Acid in Low-Mol.-Wt. Polymer | 6 | 6 | 6 | 6 | 6 | 10 | 10 | 2 |
| Wt. % of Low-Mol.-Wt. Polymer in Blend | 75 | 75 | 50 | 50 | 50 | 75 | 25 | 75 |
| Crosslinking Agent* CX-100 (%) | 0.4 | 0.8 | 0 | 0.8 | 0 | 0.4 | 0.4 | 0.4 |
| Finat Tack* | 270(P) | 347(P) | 193(P) | 438(P) | 158(P) | 616(P) | 443(P) | 308(P) |
| Loop Tack (PE) | 230(PS) | 150(P) | 160(PS) | 260(PS) | 190(P) | 270(PS) | 38(PS) | 190(PS) |
| 90° Peel (PE) | 250(PS) | 120(P) | 230(PS) | 400(PS/F) | 220(S) | 260(PS) | 50-200*** | 110(PS) |
| 90° Peel (SS) | 460(IPT) | 390(IPT) | 580(IPT) | 290(P) | 280(PS) | 620(IPT) | 400(IPT) | 230(PS) |
| Shear (500/wk) | 26.6(PS) | 237** | 1.98(C) | 1.1(C/ $P^2$/1) | 1.36(C/ $P^3$/1) | 0.9(C) | 240** | 0.18(C) |
| 1/2" Mandrel (PE) | <0.4 | Fail | <0.4 | 8.0-9.6 | 8.0-9.6 | 0.4 | 6.4-1.6 | Fail |
| (12.7mm, 7 days) | | (11.2) | | 8.0-3.2 | 9.6-9.6 | | 4.8-4.8 | (11.2) |
| Bleed Resistance at 60°C (1 week) | Good | Very Good | Good | Very Good | Good | Very Good | Very Good | Very Poor |

*Loop tack to glass
**No slip
***Slip stick

TABLE IV (continued)

Examples 17 to 42

| EXAMPLE | 33 | 34 | 35 | 36 | 37 |
|---|---|---|---|---|---|
| % Acrylic Acid in High-Mol.-Wt. Polymer | 6 | 6 | 10 | 10 | 2 |
| % Acrylic Acid in Low-Mol.-Wt. Polymer | 2 | 6 | 6 | 6 | 6 |
| Wt. % of Low-Mol.-Wt. Polymer in Blend | 25 | 50 | 75 | 25 | 75 |
| Crosslinking Agent* CX-100 (%) | 0.4 | 0.4 | 0.4 | 0.4 | 0.4 |
| Finat Tack* | 520(P) | 347(P) | 385(P) | 115(P)*** | 350(P) |
| Loop Tack (PE) | 100(PS) | 160(PS) | 290(P) | 40(PS) | 220(PS) |
| 90° Peel (PE) | 130(PS) | 200(P) | 250(PS) | 35-120*** | 200(F/P) |
| 90° Peel (SS) | 390(IPT) | 540(IPT) | 480(SPS) | 380(IPT) | 210(F/P) |
| Shear (500/wk) | 142** | 30.9(PS/F) 16.9(P/F) | 1.16(C) | 85** | 0.26(C/ P$^1$/1) |
| 1/2" Mandrel (PE) | Fail | <0.4 | 0.8-0.8. | Fail | 1.6-3.2 |
| (12.7mm, 7 days) | (11.2) | 0.4-0.4 | 6.4-4.8 | (11.2) | |
| Bleed Resistance at 60°C (1 week) | Good | Very Good | Good | Very Good | Poor |

*Loop tack to glass
**No slip
***Slip stick

TABLE IV (continued)

Examples 17 to 42

| EXAMPLE | 38 | 39 | 40 | 41 | 42 |
|---|---|---|---|---|---|
| % Acrylic Acid in High-Mol.-Wt. Polymer | 2 | 6 | 6 | 6 | 6 |
| % Acrylic Acid in Low-Mol.-Wt. Polymer | 6 | 10 | 10 | 2 | 2 |
| Wt. % of Low-Mol.-Wt. Polymer in Blend | 25 | 50 | 50 | 50 | 50 |
| Crosslinking Agent* CX-100 (%) | 0.4 | 0.8 | 0 | 0.8 | 0 |
| Pinat Tack* | 17.5(P) | 446(P) | 269(P) | 366(P) | 192(P) |
| Loop Tack (PE) | 140(PS) | 140(PS) | 210(PS) | 120(PS) | 230(PS) |
| 90° Peel (PE) | 120(P) | 53-200*** | 240(PS) | 120(PS) | 180(PS) |
| 90° Peel (SS) | 190(P) | 460(IPT) | 460(IPT) | 330(F) | 480(P) |
| Shear (500/wk) | 2.73(C/P) | 18.9(P/C) | 4.79(C) | 7.5(PS) 19.3(PS) | 4.74(C) |
| 1/2" Mandrel (PE) | 8.0-0.8 | Fail | 0.8-0.8 | Fail | 0.8-0.8 |
| (12.7mm, 7 days) | | (11.2) | | (11.2) | |
| Bleed Resistance at 60°C (1 week) | Good | Very Good | Very Good | Poor | Very Good |

*Loop tack to glass
**No slip
***Slip stick

## Example 43

An adhesive formulation showing good alkali removability for use in recycle labeling of beverage containers, was formulated from 25 parts by weight of a high-molecular-weight polymer containing about 96 percent by weight ethyl acrylate and 4 percent by weight acrylic acid and having a molecular weight of about 400,000; and 75 percent by weight of a low-molecular-weight polymer containing 88 percent by weight ethyl acrylate and 12 percent by weight acrylic acid and having a molecular weight of less than about 12,000. A particular utility of the adhesive is to label recyclable beer kegs where the label is removed by caustic on recycle for refilling.

## Claims

1. A pressure-sensitive adhesive composition comprising in combination, a high-molecular-weight alkyl acrylate polymer having a molecular-weight greater than 10 times the entanglement molecular-weight of the polymer and/or a weight-average molecular weight of at least $10^5$, and containing at least 70 percent by weight of an alkyl acrylate having from 2 to 4 carbon atoms on the alkyl side chain, and from 40 percent by weight to 80 percent by weight of a low-molecular weight alkyl acrylate polymer, based on the total weight of said high-molecular-weight alkyl acrylate polymer and said low-molecular-weight alkyl acrylate polymer, said low-molecular-weight alkyl acrylate polymer being formed of an alkyl acrylate identical to the alkyl acrylate of said high-molecular-weight alkyl acrylate polymer, having a molecular weight of less than 2 times the entanglement molecular-weight of the polymer and/or a weight-average molecular weight of less than $2 \times 10^4$, and containing at least 70 percent by weight of the alkyl acrylate, the comonomer contents of said high-molecular-weight alkyl acrylate polymer and said tow-molecular-weight alkyl acrylate polymer differing by no more than 10 pecent by weight.

2. The pressure-sensitive adhesive composition of claim 1 in which the high-molecular-weight alkyl acrylate polymer contains at least 90 percent by weight alkyl acrylate.

3. The pressure-sensitive adhesive composition of claim 1 in which the low-molecular-weight alkyl acrylate polymer contains at least 80 percent by weight alkyl acrylate.

4. The pressure-sensitive-adhesive composition of claim 2 in which the tow-molecular-weight alkyl acrylate polymer contains at least 90 percent by weight alkyl acrylate.

5. The pressure-sensitive-adhesive composition of claim 1 in which the alkyl acrylate is ethyl acrylate.

6. The pressure-sensitive-adhesive composition of claim 1 in which the alkyl acrylate is copoylmerized with an unsaturated carboxylic acid.

7. The pressure-sensitive-adhesive composition of claim 6 in which the carboxylic acid is acrylic acid.

8. The pressure-sensitive-adhesive composition of any of claims 2 to 5 in which the alkyl acrylate is copolymerized with acrylic acid.

9. A pressure-sensitive adhesive composition comprising a high-molecular weight alkyl acrylate polymer comprised of at least 70 percent by weight ethyl acrylate, said high-molecular-weight alkyl acrylate polymer having a molecular-weight which is at least 10 times the entanglement molecular-weight and/or a weight-average molecular weight of at least $10^5$, and a low-molecular-weight alkyl acrylate polymer having a molecular-weight of less than 2 times the entanglement molecular-weight and/or a weight-average molecular weight of less than $2 \times 10^4$, and containing at least 70 percent by weight ethyl acrylate, the balance of said low-molecular-weight alkyl acrylate being present in a concentration of from 40 to 80 percent by weight, based on the total weights of the high-molecular-weight alkyl acrylate polymer and the low-molecular weight alkyl acrylate polymer, and providing a a composition having a glass-transition temperature of at least 40°C below use temperature, said high-molecular-weight alkyl acrylate polymer and/or said low-molecular-weight alkyl acrylate polymer containing an interpolymer amount of at least one unsaturated carboxylic acid.

10. The pressure sensitive adhesive composition of claim 9 in which the carboxylic acid is acrylic acid.

11. An alkali-removable pressure-sensitive adhesive composition comprising a high-molecular-weight copolymer of ethyl acrylate and acrylic acid, said high-molecular-weight copolymer containing 96 percent by weight ethyl acrylate and 4 percent by weight acrylic acid and having a molecular-weight greater than 10 times the entanglement molecular-weight and/or a weight-average molecular weight of at least $10^5$, in combination with a low-molecular-weight copolymer of ethyl acrylate and acrylic acid containing 88 percent by weight ethyl acrylate and 12 percent by weight acrylic acid, said low-molecular-weight copolymer having a molecular-weight of less than 2 times the entanglement molecular-weight and/or a weight-average molecular weight of less than $2 \times 10^4$, said pressure-sensitive-adhesive composition having a glass-transition temperature of at least 40°C below the use temperature thereof.

## Patentansprüche

1. Druckempfindliche Klebemasse, umfassend in Kombination ein Alkylacrylatpolymer mit hohem Molekulargewicht, wobei das Molekulargewicht gröber als das Zehnfache des Verhakungsmolekulargewichts des Polymers ist und/oder das gewichtsdurchschnittliche Molekulargewicht wenigstens $10^5$ beträgt, und welches wenigstens 70 Gew.-% eines Alkylacrylats mit 2 bis 4 Kohlenstoffatomen auf der Alkylseitenkette enthält, und 40 bis 80 Gew.-% eines Alkylacrylatpolymers mit niedrigem Molekulargewicht, bezogen auf das Gesamtgewicht des Alkylacrylatpolymers mit hohem Molekulargewicht und des Alkylacrylatpolymers mit niedrigem Molekulargewicht, wobei das Alkylacrylatpolymer mit niedrigem Molekulargewicht aus einem Alkylacrylat, das mit dem Alkylacrylat des Alkylacrylatpolymers mit hohem Molekulargewicht identisch ist, gebildet wird und ein Molekulargewicht besitzt, das geringer ist als das Zweifache des Verhakungsmolekulargewichts des Polymers und/oder ein gewichtsdurchschnittliches Molekulargewicht von weniger als 2 mal $10^4$ besitzt und das wenigstens 70 Gew.-% des Alkylacrylats enthält, wobei sich die Comonomergehalte des Alkylacrylatpolymers mit hohem Molekulargewicht und des Alkylacrylatpolymers mit niedrigem Molekulargewicht voneinander um nicht mehr als 10 Gew.-% unterscheiden.

2. Druckempfindliche Klebemasse nach Anspruch 1, worin das Alkylacrylatpolymer mit hohem Molekulargewicht wenigstens 90 Gew.-% Alkylacrylat enthält.

3. Druckempfindliche Klebemasse nach Anspruch 1, worin das Alkylacrylatpolymer mit niedrigem Molekulargwicht wenigstens 80 Gew.-% Alkylacrylat enthält.

4. Druckempfindliche Klebemasse nach Anspruch 2, worin das Alkylacrylatpolymer mit niedrigem Molekulargewicht wenigstens 90 Gew.-% Alkylacrylat enthält.

5. Druckempfindliche Klebemasse nach Anspruch 1, worin das Alkylacrylat Ethylacrylat ist.

6. Druckempfindliche Klebemasse nach Anspruch 1, worin das Alkylacrylat mit einer ungesättigten Carbonsäure copolymerisiert ist.

7. Druckempfindliche Klebemasse nach Anspruch 6, worin die Carbonsäure Acrylsäure ist.

8. Druckempfindliche Klebemasse nach einem der Ansprüche 2 bis 5, worin das Alkylacrylat mit Methacrylsäure copolymerisiert ist.

9. Druckempfindliche Klebemasse, umfassend ein Alkylacrylatpolymer mit hohem Molekulargewicht, zusammengesetzt aus wenigstens 70 Gew.-% Ethylacrylat, wobei das Alkylacrylatpolymer mit hohem Molekulargewicht ein Molekulargewicht besitzt, das um wenigstens das Zehnfache größer ist als das Verhakungsmolekulargewicht und/oder ein gewichtsdurchschnittliches Molekulargewicht von wenigstens $10^5$ besitzt, und ein Alkylacrylatpolymer mit niedrigem Molekulargewicht mit einem Molekulargewicht, das geringer ist als das Zweifache des Verhakungsmolekulargewichts und/oder ein gewichtsdurchschnittliches Molekulargewicht von weniger als 2 mal $10^4$ besitzt, und welches wenigstens 70 Gew.-% Ethylacrylat enthält, wobei der Rest des Alkylacrylats mit niedrigem Molekulargewicht in einer Konzentration von 40 bis 80 Gew.-%, bezogen auf die Gesamtgewichte des Alkylacrylatpolymers mit hohem Molekulargewichts und des Alkylacrylatpolymers mit niedrigem Molekulargewicht, vorliegt und eine Masse mit einer Glasübergangstemperatur von wenigstens 40°C unterhalb der Verwendungstemperatur besitzt, wobei das Alkylacrylatpolymer mit hohem Molekulargewicht und/oder das Alkylacrylatpolymer mit niedrigem Molekulargewicht eine Interpolymermenge von wenigstens einer ungesättigten Carbonsäure enthält.

10. Druckempfindliche Klebemasse nach Anspruch 9, worin die Carbonsäure Acrylsäure ist.

11. Alkalientfernbare druckempfindliche Klebemasse, umfassend ein Copolymer mit hohem Molekulargewicht aus Ethylacrylat und Acrylsäure, wobei das Copolymer mit hohem Molekulargewicht 96 Gew.-% Ethylacrylat und 4 Gew.-% Acrylsäure enthält und ein Molekulargewicht besitzt, das größer als das Zehnfache des Verhakungsmolekulargewichts ist und/oder ein gewichtsdurchschnittliches Molekulargewicht von wenigstens $10^5$ besitzt, in Kombination mit einem Copolymer mit niedrigem Molekulargewicht aus Ethylacrylat und Acrylsäure, enthaltend 88 Gew.-% Ethylacrylat und 12 Gew.-% Acrylsäure, wobei das Copolymer mit niedrigem Molekulargewicht ein Molekulargewicht besitzt, das weniger als das Zweifache des Verhakungsmolekulargewichts ist und/oder ein gewichtsdurchschnittliches Molekulargewicht von weniger als 2 mal $10^4$ besitzt, wobei die druckempfindliche Klebemasse eine Glasübergangstemperatur von wenigstens 40°C unterhalb seiner Verwendungstemperatur besitzt.

## Revendications

1. Composition d'adhésifs sensibles à la pression comprenant en combinaison, un polymère d'acrylate d'alkyle de poids moléculaire élevé ayant un poids moléculaire plus grand que 10 fois le poids moléculaire d'enchevêtrement du polymère et/ou un poids moléculaire de moyenne en poids d'au moins $10^5$, et contenant au moins 70 pour cent en poids d'acrylate d'alkyle ayant de 2 à 4 atomes de carbone sur la chaine latérale alkyle, et de 40 pour cent en poids à 80 pour cent en poids d'un polymère d'acrylate d'alkyle de faible poids moléculaire, sur la base d'un poids total dudit polymère d'acrylate d'alkyle de poids moléculaire élevé et dudit polymère d'acrylate d'alkyle de faible poids moléculaire, ledit polymère d'acrylate d'alkyle de faible poids moléculaire étant formé d'un acrylate d'alkyle identique à l'acrylate d'alkyle dudit polymère d'acrylate d'alkyle de poids moléculaire élevé, ayant un poids moléculaire inférieur à 2 fois le poids moléculaire d' enchevêtrement du polymère et/ou un poids moléculaire de moyenne en poids inférieur à 2 X $10^4$, et contenant au moins 70 pour cent en poids d'acrylate d'alkyle, les concentrations en comonomères dudit polymère d'acrylate d'alkyle de poids moléculaire élevé et dudit polymère d'acrylate d'alkyle de faible poids moléculaire n'étant pas différent

13

de plus de 10 pour cent en poids.

2. Composition d'adhésifs sensibles à la pression selon la revendication 1 dans laquelle le polymère d'acrylate d'alkyle de poids moléculaire élevé contient au moins 90 pour cent en poids d'acrylate d'alkyle.

3. Composition d'adhésifs sensibles à la pression selon la revendication 1 dans laquelle le polymère d'acrylate d'alkyle de faible poids moléculaire contient au moins 80 pour cent en poids d'acrylate d'alkyle.

4. Composition d'adhésifs sensibles à la pression selon la revendication 2 dans laquelle le polymère d'acrylate d'alkyle de faible poids moléculaire contient au moins 90 pour cent en poids d'acrylate d'alkyle.

5. Composition d'adhésifs sensibles à la pression selon la revendication 1 dans laquelle l'acrylate d'alkyle est l'acrylate d'éthyle.

6. Composition d'adhésifs sensibles à la pression selon la revendication 1 dans laquelle l'acrylate d'alkyle est copolymérisé avec un acide carboxylique insaturé.

7. Composition d'adhésifs sensibles à la pression selon la revendication 6 dans laquelle l'acide carboxylique est l'acide acrylique.

8. Composition d'adhésifs sensibles à la pression selon l'une quelconque des revendications 2 à 5 dans laquelle l'acrylate d'alkyle est copolymérisé avec un acide acrylique.

9. Composition d'adhésifs sensibles à la pression comprenant un polymère d'acrylate d'alkyle de poids moléculaire élevé composé d'au moins 70 pour cent en poids d'acrylate d'éthyle, ledit polymère d'acrylate d'alkyle de poids moléculaire élevé ayant un poids moléculaire qui est au moins 10 fois le poids moléculaire d' enchevêtrement et/ou un poids moléculaire de moyenne en poids d'au moins $10^5$, et un polymère d'acrylate d'alkyle de faible poids moléculaire ayant un poids moléculaire inférieur à 2 fois le poids moléculaire d'enchevêtrement et/ou un poids moléculaire de moyenne en poids inférieur à $2 \times 10^4$, et contenant au moins 70 pour cent en poids d'acrylate d'éthyle, le reste dudit acrylate d'alkyle de faible poids moléculaire étant présent dans une concentration de 40 à 80 pour cent en poids, sur la base des poids totaux du polymère d'acrylate d'alkyle de poids moléculaire élevé et du polymère d'acrylate d'alkyle de faible poids moléculaire, et fournissant une composition ayant une température de transition vitreuse d'au moins 40°C au-dessous de la température d'utilisation, ledit polymère d'acrylate d'alkyle de poids moléculaire élevé et/ou ledit polymère d'acrylate d'alkyle de faible poids moléculaire contenant une quantité de copolymère d'au moins un acide carboxylique insaturé.

10. Composition d'adhésifs sensibles à la pression selon la revendication 9 dans laquelle l'acide carboxylique est l'acide acrylique.

11. Composition d'adhésifs sensibles à la pression enlevables aux alcalis comprenant un copolymère de poids moléculaire élevé d'acrylate d'éthyle et d' acide acrylique, ledit copolymère de poids moléculaire élevé contenant 96 pour cent en poids d'acrylate d'éthyle et 4 pour cent en poids d'acide acrylique et ayant un poids moléculaire plus grand que 10 fois le poids moléculaire d'enchevêtrement et/ou un poids moléculaire de moyenne en poids d'au moins $10^5$, en combinaison avec un copolymère de faible poids moléculaire d'acrylate d'éthyle et d' acide acrylique contenant 88 pour cent en poids d'acrylate d'éthyle et 12 pour cent en poids d'acide acrylique, ledit copolymère de faible poids moléculaire ayant un poids moléculaire inférieur à 2 fois le poids moléculaire d'enchevêtrement et/ou un poids moléculaire de moyenne en poids inférieur à $2 \times 10^4$, ladite composition d'adhésifs sensibles à la pression ayant une température de transition vitreuse d'au moins 40°C inférieure à sa température d'utilisation.

# Fig.1.

MODULUS, RATIO OF STRESS/STRAIN
LOG G

DESIRED PSA

BASE RESIN

LOG ω

FREQUENCY OF DEFORMATION

# Fig.2.

BASE
RESIN

DESIRED
PSA

MODULUS, RATIO OF STRESS/STRAIN
LOG G

LOG ω
FREQUENCY OF DEFORMATION